# FASCICULE DE BREVET EUROPEEN

(11) **EP 0 680 688 B1**
(45) Date de publication et mention de la délivrance du brevet: **06.10.1999**
(21) Numéro de dépôt: 95440022.2
(22) Date de dépôt: 03.05.1995
(51) Int. Cl.: A01D 78/10

(54) **Machine de fenaison, notamment un andaineur de fourrage**
Heuwerbungsmaschine, insbesondere ein Schwader für Futter
Haymaking machine, especially a forage windrower

(30) Priorité: 04.05.1994 FR 9405655
(43) Date de publication de la demande: 08.11.1995
(73) Titulaire: KUHN S.A., F-67700 Saverne (FR)
(72) Inventeur: Gantzer, Christian, F-57820 Dannelbourg (FR)
(74) Mandataire: Andres, Jean-Claude

(56) Documents cités:
- EP-A- 0 508 200
- EP-A- 0 614 604
- DE-A- 4 033 526
- DE-A- 4 122 072
- DE-U- 8 811 010
- DE-U- 9 004 189

## Description

La présente invention se rapporte à une machine de fenaison, notamment un andaineur de fourrage, comportant une structure porteuse pouvant être reliée à un tracteur, laquelle structure porte au moins un rotor qui peut tourner autour d'un axe support sensiblement vertical auquel sont reliés deux balanciers portant chacun deux roues porteuses. Une telle machine est décrite dans EP-A-0 614 604.

Sur une machine de ce genre, les balanciers permettent de réduire l'ampleur des déplacements transmis au rotor lorsque les roues porteuses passent sur des dénivellations. Par conséquent, ledit rotor s'adapte mieux à la surface du sol et peut être déplacé à plus grande vitesse.

Toutefois dans les virages, les roues ripent sur le sol. Elle subissent alors une importante usure et elles peuvent endommager la végétation de la surface du sol. Ce ripement provient du fait qu'elles sont décalées l'une par rapport à l'autre dans la direction d'avancement. Pour remédier à cela, il a été proposé de rendre une ou les deux roues porteuses de chaque paire pivotantes par rapport à leur balancier autour d'axes sensiblement verticaux. Dans ce cas, le balancier doit se situer au-dessus de la ou des roues porteuses pivotantes afin qu'elles aient la place pour tourner autour desdits axes. Or, étant donné que la hauteur disponible sous chaque rotor est limitée par le moyeu et/ou les bras porte-outils de ce rotor, il est uniquement possible d'utiliser des roues pivotantes ayant un petit diamètre. De telles roues roulent moins bien sur les terrains dénivellés et ne conviennent pas pour équiper des machines de grandes dimensions. De plus, pour rendre ces roues pivotantes, il est nécessaire de monter chacune sur un bras qui doit être articulé sur le balancier correspondant. Une telle réalisation est relativement compliquée et coûteuse.

Par ailleurs, les roues pivotantes dévient facilement de leur trajectoire lorsqu'elles rencontrent des obstacles. Il peut ainsi arriver que les roues porteuses qui sont disposées sous le même rotor ne soient pas toutes orientées dans la même direction. Dans ce cas, elles ripent sur le sol et déstabilisent la machine.

La présente invention a pour but de proposer une machine qui ne présente pas les inconvénients précités. Le montage des roues porteuses doit être simple et doit leur permettre de s'orienter correctement dans les virages. Il doit aussi procurer une meilleure stabilité à la machine.

A cet effet, une importante caractéristique de l'invention consiste en ce que les deux balanciers qui portent les roues de transport sont liés à un seul et même support et que ce support est lui-même articulé sur une poutre solidaire de l'axe support du rotor, au moyen d'un seul pivot sensiblement vertical qui se situe devant ledit axe support.

Grâce à ce montage, toutes les roues porteuses pivotent ensemble autour du pivot sensiblement vertical dans les virages. Elles s'orientent ainsi parfaitement suivant la trajectoire donnée par le tracteur. Ce mode de réalisation ne nécessite qu'un seul pivot sensiblement vertical pour toutes les roues porteuses du rotor, ce qui simplifie la construction. Il permet aussi l'emploi de roues porteuses ayant un grand diamètre. Enfin, aucune de ces roues ne dévie de sa trajectoire lorsqu'elle rencontre un obstacle.

Selon une autre caractéristique de l'invention, la poutre qui est solidaire de l'axe support du rotor comporte une butée contre laquelle s'appuie le support des roues porteuses. Cette butée se situe avantageusement entre le pivot sensiblement vertical du support des roues porteuses et l'axe support du rotor. Cet agencement permet de limiter les efforts, notamment de flexion, qui s'exercent sur ledit pivot. La rigidité du support des roues est également améliorée. On obtient ainsi une meilleure stabilité de l'ensemble porteur sans avoir à augmenter les dimensions ou à renforcer les pièces qui le composent, ce qui entraînerait une augmentation de leur poids et du coût.

D'autres caractéristiques et avantages de l'invention ressortiront de la description ci-après d'un exemple de réalisation non limitatif de l'invention, avec référence aux dessins annexés dans lesquels :
- La figure 1 représente une vue de dessus simplifiée d'une machine selon l'invention.
- La figure 2 représente une vue de côté avec une coupe partielle de la machine de la figure 1.

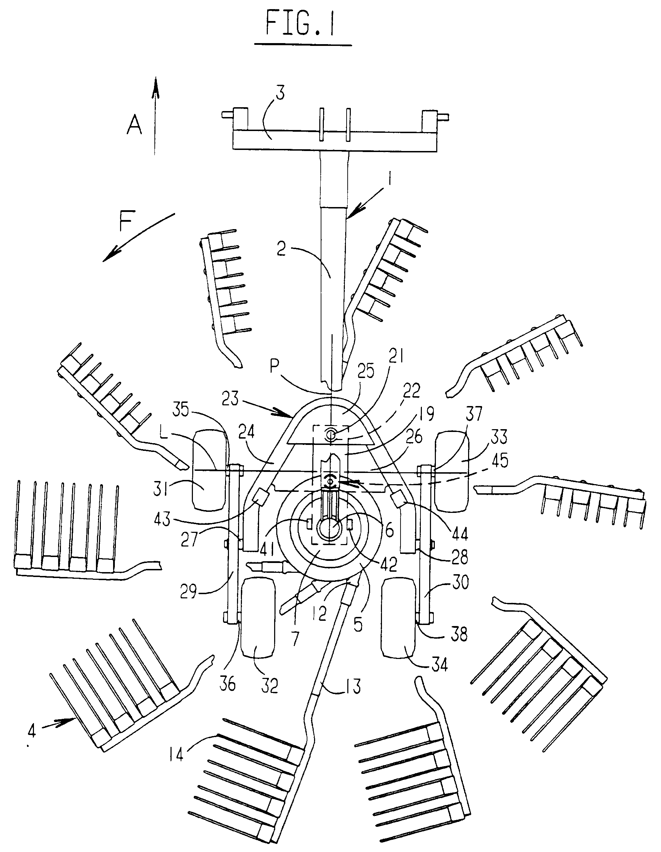

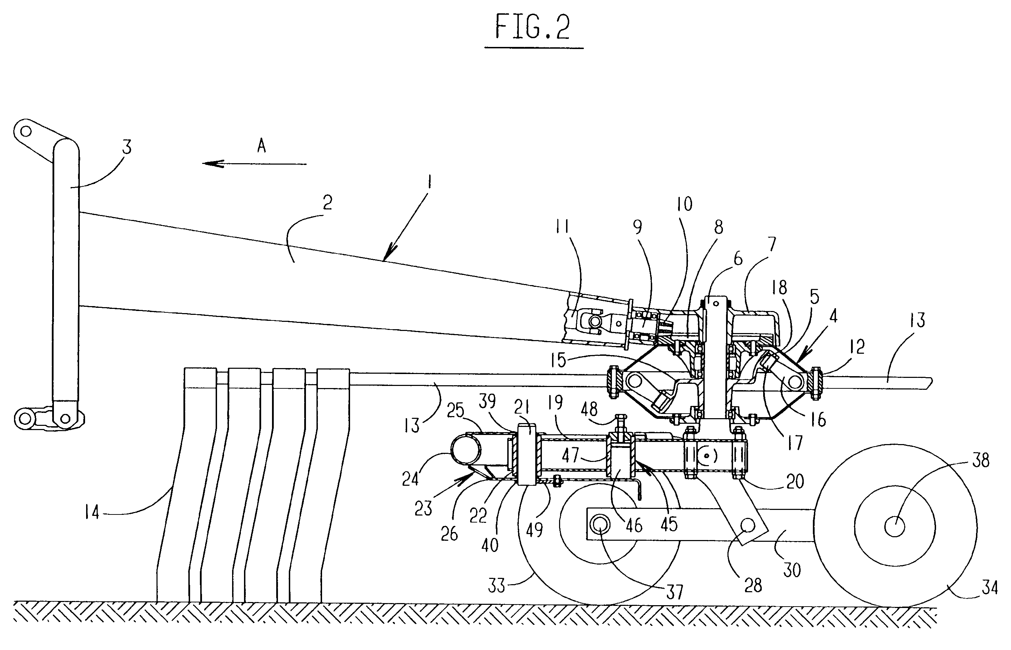

Telle qu'elle est représentée sur les figures 1 et 2, la machine selon l'invention comporte une structure porteuse (1). Celle-ci est constituée par une poutre (2) portant à son extrémité avant un dispositif d'accouplement trois points (3) pour l'accrochage à un tracteur d'entraînement non représenté. L'autre extrémité de la poutre (2) porte un rotor (4) destiné à andainer des produits tels que de l'herbe coupée se trouvant sur le sol. Ledit rotor (4) possède un boîtier ou carter (5) monté de manière à pouvoir tourner sur un axe support sensiblement vertical (6). Cet axe support (6) est fixé à son extrémité supérieure dans un palier d'une calotte (7) qui est elle-même fixée à la poutre (2). A l'intérieur de cette calotte (7) se trouve une couronne dentée (8) qui est solidaire du boîtier (5). Dans la partie de la calotte (7) qui est dirigée vers la poutre (2) est logé un arbre de transmission (9) avec un pignon (10) qui engrène avec la couronne dentée (8). Cet arbre de transmission (9) peut être relié à l'arbre de prise de force du tracteur au moyen d'arbres intermédiaires (11) en vue de l'entraînement en rotation du boîtier (5) du rotor (4).

Le boîtier (5) est muni de paliers (12) à travers lesquels passent des bras (13). Ceux-ci s'étendent en forme de rayons et portent à leurs extrémités extérieures des outils de travail (14) constitués par des fourches. Ils sont logés dans lesdits paliers (12) de manière à pouvoir tourner sur eux-mêmes. Sur la partie de l'axe support (6) qui se situe dans le boîtier (5) est montée une came fixe (15) destinée à commander les bras porte-outils (13) durant le travail. Pour cela chaque bras (13) possède à son extrémité qui s'étend à l'intérieur du boîtier (5) un levier (16) avec un galet (17) qui est guidé dans une gorge (18) de la came (15).

L'extrémité inférieure de l'axe support (6) se situe sous le boîtier (5). A cette extrémité est fixée une poutre (19) ou une pièce similaire, au moyen de vis ou de boulons (20). Cette poutre (19) est dirigée dans la direction d'avancement (A) de la machine. Elle a un profil rectangulaire et est de préférence creuse. Cette poutre comporte un pivot (21) sensiblement vertical. Ce pivot (21) est logé dans un tube (22) solidaire du bras (19). Il se situe devant l'axe support (6) du rotor (4), sensiblement dans un même plan (P) qui est dirigé dans la direction d'avancement (A).

Un support (23) est articulé sur le pivot (21) de manière à pouvoir tourner dans un plan sensiblement horizontal. Ce support (23) est constitué par un tube cintré (24) et deux plaques (25 et 26) pratiquement horizontales qui sont soudées audit tube (24). Ces plaques (25 et 26) se situent l'une au-dessus de l'autre, de part et d'autre de la poutre (19). Chacune comporte un orifice (39, 40) à travers lequel passe le pivot (21). Ce dernier est muni d'une patte (49) permettant de le fixer à la plaque (26). Chaque extrémité du tube (24) comporte un axe d'articulation (27, 28) sensiblement horizontal. Sur chacun de ces axes (27 et 28) est monté un balancier (29, 30) avec deux roues porteuses (31 et 32, 33 et 34) décalées l'une par rapport à l'autre dans la direction d'avancement (A) et situées sous le rotor (4). Chacune de ces roues porteuses (31 à 34) tourne sur une fusée (35 à 38) disposée près d'une des extrémités des balanciers (29 et 30). Les deux fusées (35 et 36 ou 37 et 38) d'un même balancier (29 ou 30) se situent pratiquement à égales distances de l'axe d'articulation (27 ou 28) correspondant. Le pivot (21) du support (23) sur la poutre (19) se situe devant une ligne (L) qui passe par les fusées (35 et 37) des roues (31 et 33) les plus en avant des deux balanciers (29 et 30).

La poutre (19) comporte sur chacune de ses faces latérales un arrêt (41, 42) pour limiter les déplacements du support (23) autour du pivot (21). A cet effet, chaque branche du tube (24) comporte une patte de blocage (43, 44) qui est dirigée vers un desdits arrêts (41 et 42).

La poutre (19) comporte une butée (45) contre laquelle s'appuie le support (23) lorsque la machine repose sur les roues (31 à 34). Cette butée (45) se situe entre le pivot (21) sensiblement vertical et l'axe support (6) du rotor (4). Elle est constituée par un tampon (46) en matière plastique. Ce tampon (46) est engagé dans un tube (47) sensiblement vertical qui est solidaire de la poutre (19). La position du tampon (46) dans le tube (47) est réglable au moyen d'une vis (48) qui pousse sur son extrémité supérieure. Il peut ainsi être déplacé vers le bas jusqu'à ce qu'il arrive en contact avec la plaque (26) du support (23). Sa constitution en matière plastique améliore le glissement sur ladite plaque (26).

Les axes d'articulation (27 et 28) des balanciers (29 et 30) peuvent être déplaçables en hauteur sur le tube (24) du support (23). Cela permet de faire varier la distance du rotor (4) par rapport au sol.

L'invention concerne également une machine avec deux rotors (4) tels que décrits ci-dessus. Dans ce cas, les rotors (4) sont disposés sur les côtés d'une structure porteuse commune.

Au travail, la machine selon les figures 1 et 2 est déplacée sur le sol, dans la direction d'avancement (A), au moyen du tracteur. Le rotor (4) est alors entraîné en rotation dans le sens (F) autour de l'axe support (6), à partir de l'arbre de prise de force dudit tracteur. Durant cette rotation, la came (15) commande les bras porte-outils (13), par l'intermédiaire des leviers (16) et des galets (17), de telle sorte qu'ils déplacent leurs outils (14). Ainsi, sur la partie avant de leur trajectoire, ces outils (14) sont sensiblement verticaux et ramassent les produits se trouvant sur le sol. Ensuite, sur la partie latérale de leur trajectoire, les outils (14) sont levés de sorte qu'ils déposent les produits ramassés sous la forme d'un andain. Enfin, sur la partie arrière de leur trajectoire, lesdits outils (14) reviennent progressivement dans la position pour ramasser.

Durant ce travail, les roues (31 à 34) roulent sur le sol et portent le rotor (4). Lorsqu'elles passent sur des dénivellations elles pivotent avec le balancier (29 ou 30) correspondant autour de l'axe d'articulation (27 ou 28) de ce dernier. Les déplacements en hauteur des roues (31 à 34) sont alors plus importants que les déplacements du balancier (29, 30) correspondant au niveau de son axe d'articulation (27, 28). De ce fait les déplacements du rotor (4) sont plus faibles. Celui-ci est alors beaucoup plus stable et peut avancer à plus grande vitesse. D'autre part, dans les courbes et les virages de la trajectoire suivie par le tracteur et la machine, toutes les roues porteuses (31 à 34) pivotent ensemble avec leurs balanciers (29 et 30) et le support (23) autour du pivot sensiblement vertical (21) de ce dernier. Lesdites roues (31 à 34) s'orientent ainsi ensemble, sans ripage, dans la direction d'avancement (A). Elles ne peuvent pas non plus dévier séparément de leur trajectoire. Les pivotements autour du pivot (21) sont limités au moyen des arrêts (41 et 42) notamment pour empêcher les roues porteuses (31 à 34) d'entrer dans la trajectoire des outils (14).

Lorsque les roues porteuses (31 à 34) de la machine reposent sur le sol, le support (23) s'appuie contre la butée (45) de la poutre (19). De ce fait, le pivot (21) est délesté et la rigidité du support (23) est améliorée.

Dans le cas où la machine comporte deux rotors (4) les roues porteuses prévues sous ces derniers s'orientent de la même manière que celles décrites ci-dessus.

Il est bien évident que l'invention n'est pas limitée au mode de réalisation tel que décrit ci-dessus et représenté sur les dessins annexés. Des modifications restent possibles, notamment en ce qui concerne la constitution des divers éléments ou par substitution d'équivalents techniques, sans pour autant sortir du domaine de protection tel que défini dans les revendications.

## Revendications

1. Machine de fenaison, notamment un andaineur de fourrage, comportant une structure porteuse (1) destinée à être reliée à un tracteur, laquelle structure (1) porte au moins un rotor (4) apte à tourner autour d'un axe support (6) sensiblement vertical auquel sont reliés deux balanciers (29 et 30) portant chacun deux roues porteuses (31 et 32, 33 et 34), caractérisée par le fait que les deux balanciers (29 et 30) sont liés à un seul et même support (23) et que ce support (23) est lui-même articulé sur une poutre (19) solidaire de l'axe support (6), au moyen d'un seul pivot sensiblement vertical (21) qui se situe devant ledit axe support (6).

2. Machine selon la revendication 1, caractérisée par le fait que le pivot sensiblement vertical (21) se situe sensiblement dans un même plan (P) qui est dirigé dans la direction d'avancement (A), que l'axe support (6) du rotor (4).

3. Machine selon la revendication 1 ou 2, caractérisée par le fait que le pivot (21) se situe devant une ligne (L) passant par les fusées (35 et 37) des roues (31 et 33) les plus en avant des deux balanciers (29 et 30).

4. Machine selon la revendication 1, caractérisée par le fait que les balanciers (29 et 30) sont articulés sur le support (23) au moyen d'axes (27 et 28) sensiblement horizontaux.

5. Machine selon l'une quelconque des revendications précédentes, caractérisée par le fait qu'elle comporte deux arrêts (41 et 42) pour limiter les déplacements du support (23) autour du pivot (21).

6. Machine selon la revendication 5, caractérisée par le fait que les deux arrêts (41 et 42) se situent sur la poutre (19).

7. Machine selon l'une quelconque des revendications précédentes, caractérisée par le fait que la poutre (19) comporte une butée (45) contre laquelle s'appuie le support (23) des roues porteuses (31 à 34).

8. Machine selon la revendication 7, caractérisée par le fait que la butée (45) se situe entre le pivot sensiblement vertical (21) et l'axe support (6) du rotor (4).

9. Machine selon la revendication 7 ou 8, caractérisée par le fait que la position de la butée (45) est réglable.

10. Machine selon l'une quelconque des revendications 7 à 9, caractérisée par le fait que la butée (45) est constituée par un tampon (46) en matière plastique.

11. Machine selon l'une quelconque des revendications 1 à 7, caractérisée par le fait que le support (23) est constitué par un tube cintré (24) et deux plaques (25 et 26).

## Claims

1. Haymaking machine, especially a forage windrower, comprising a carrier structure (1) intended to be connected to a tractor, which structure (1) carries at least one rotor (4) capable of rotating about a substantially vertical support spindle (6) to which there are connected two rocking beams (29 and 30) each carrying two carrier wheels (31 and 32, 33 and 34), ***characterized in*** that the two rocking beams (29 and 30) are connected to one and the same support (23) and in that this support (23) is itself articulated to a beam (19) secured to the support spindle (6), by means of a single substantially vertical pivot (21) which lies in front of the said support spindle (6).

2. Machine according to Claim 1, ***characterized in*** that the substantially vertical pivot (21) lies substantially in one same plane (P) which is oriented in the direction of forward travel (A), as the support spindle (6) of the rotor (4).

3. Machine according to Claim 1 or 2, ***characterized in*** that the pivot (21) lies in front of a line (L) passing through the stub axles (35 and 37) of the furthest forward wheels (31 and 33) of the two rocking beams (29 and 30).

4. Machine according to Claim 1, ***characterized in*** that the rocking beams (29 and 30) are articulated on the support (23) by means of substantially horizontal axes (27 and 28).

5. Machine according to any one of the preceding claims, ***characterized in*** that it comprises two stops (41 and 42) for limiting the displacements of the support (23) about the pivot (21).

6. Machine according to Claim 5, ***characterized in*** that the two stops (41 and 42) lie on the beam (19).

7. Machine according to any one of the preceding claims, ***characterized in*** that the beam (19) comprises an abutment (45) against which the support (23) of the carrier wheels (31 to 34) rests.

8. Machine according to Claim 7, ***characterized in*** that the abutment (45) is located between the substantially vertical pivot (21) and the support spindle (6) of the rotor (4).

9. Machine according to Claim 7 or 8, ***characterized in*** that the position of the abutment (45) is adjustable.

10. Machine according to any one of Claims 7 to 9, ***characterized in*** that the abutment (45) consists of a buffer (46) made of plastic.

11. Machine according to any one of Claims 1 to 7, ***characterized in*** that the support (23) consists of a bent tube (24) and of two plates (25 and 26).

## Patentansprüche

1. Heuwerbungsmaschine, insbesondere ein Schwader für Futter, mit einem Traggestell (1), das an einen Traktor gekuppelt werden kann, wobei das Gestell (1) mindestens einen Rotor (4) trägt, der sich um eine im wesentlichen vertikale Stützachse (6) drehen kann, mit der zwei Schwingen (29 und 30) verbunden sind, die jeweils zwei Stützräder (31 und 32, 33 und 34) tragen, ***dadurch gekennzeichnet,*** daß die beiden Schwingen (29 und 30) mit ein und derselben Stütze (23) verbunden sind und daß diese Stütze (23) wiederum mittels eines einzigen, im wesentlichen vertikalen Drehzapfens (21), der sich vor der Stützachse (6) befindet, an einem fest mit dieser Stützachse (6) verbundenen Träger (19) angelenkt ist.

2. Maschine nach Anspruch 1, ***dadurch gekennzeichnet,*** daß sich der im wesentlichen vertikale Drehzapfen (21) im wesentlichen in einer gleichen Ebene (P) wie die Stützachse (6) des Rotors (4) befindet, die in Fahrtrichtung (A) ausgerichtet ist.

3. Maschine nach Anspruch 1 oder 2, ***dadurch gekennzeichnet,*** daß sich der Drehzapfen (21) vor einer Linie (L) befindet, die die Zapfen (35 und 37) der vordersten Räder (31 und 33) der beiden Schwingen (29 und 30) durchläuft.

4. Maschine nach Anspruch 1, ***dadurch gekennzeichnet,*** daß die Schwingen (29 und 30) mittels im wesentlichen horizontaler Achsen (27 und 28) an der Stütze (23) angelenkt sind.

5. Maschine nach irgend einem der vorhergehenden Ansprüche, ***dadurch gekennzeichnet,*** daß sie zwei Halteglieder (41 und 42) zur Begrenzung der Bewegungen der Stütze (23) um den Drehzapfen (21) aufweist.

6. Maschine nach Anspruch 5, ***dadurch gekennzeichnet,*** daß sich die beiden Halteglieder (41 und 42) am Träger (19) befinden.

7. Maschine nach irgend einem der vorhergehenden Ansprüche, ***dadurch gekennzeichnet,*** daß der Träger (19) einen Anschlag (45) aufweist, an dem die Stütze (23) der Stützräder (31 bis 34) zur Anlage kommt.

8. Maschine nach Anspruch 7, ***dadurch gekennzeichnet,*** daß sich der Anschlag (45) zwischen dem im wesentlichen vertikalen Drehzapfen (21) und der Stützachse (6) des Rotors (4) befindet.

9. Maschine nach Anspruch 7 oder 8, ***dadurch gekennzeichnet,*** daß die Position des Anschlags (45) einstellbar ist.

10. Maschine nach irgend einem der Ansprüche 7 bis 9, ***dadurch gekennzeichnet,*** daß der Anschlag (45) aus einem Puffer (46) aus Kunststoff besteht.

11. Maschine nach irgend einem der Ansprüche 1 bis 7, ***dadurch gekennzeichnet,*** daß die Stütze (23) aus einem rundgebogenen Rohr (24) und zwei Platten (25 und 26) besteht.
